(19) Europäisches Patentamt
European Patent Office
Office européen des brevets

(11) **EP 1 285 851 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(51) Int Cl.:
*B65B 5/10* (2006.01)  *B65B 57/16* (2006.01)

(21) Anmeldenummer: **02405691.3**

(22) Anmeldetag: **14.08.2002**

(54) **Verfahren und Vorrichtung zum Befüllen von Behältern mit Stückgütern**

Method and apparatus for filling containers with articles

Procédé et appareil pour remplir des conteneurs avec des marchandises

(84) Benannte Vertragsstaaten:
**AT BE BG CH CY CZ DE DK EE ES FI FR GB GR IE IT LI LU MC NL PT SE SK TR**

(30) Priorität: **22.08.2001 CH 20011551**

(43) Veröffentlichungstag der Anmeldung:
**26.02.2003 Patentblatt 2003/09**

(73) Patentinhaber: **ROBERT BOSCH GMBH**
**70442 Stuttgart (DE)**

(72) Erfinder: **Herzog, Florian**
**8003 Zürich (CH)**

(74) Vertreter: **Clerc, Natalia et al**
**Isler & Pedrazzini AG**
**Gotthardstrasse 53**
**Postfach 1772**
**8027 Zürich (CH)**

(56) Entgegenhaltungen:
**EP-A- 0 856 465    DE-A- 4 208 818**
**US-A- 6 002 125    US-A- 6 011 998**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Die Erfindung bezieht sich auf ein Verfahren und eine Vorrichtung zum Befüllen von Behältern mit Stückgütern gemäss Oberbegriff des Patentanspruches 1 beziehungsweise 6.

**Stand der Technik**

Es ist für Verpackungsanlagen bekannt, Stückgüter, welche über Zufuhrförderer in eine Verpackungsstation angeliefert werden, mittels Roboter in Behälter abzufüllen. EP-A-0'250'470 offenbart derartige Roboter, auch Picker genannt, welche für den Einsatz bei Verpackungsstrassen geeignet sind. Es handelt sich um einen Roboterarm mit einem Grundkörper, an den über drei zweiteilige Arme ein Arbeitsteil angelenkt ist, an welchem wiederum Greifer oder Saugerelemente angeordnet sind.

Vor allem wenn die Stückgüter in unregelmässigen Abständen und ungeordnet angeliefert werden, sind optische Erkennungssysteme im Einsatz, um die Position und Ausrichtung der einzelnen Stückgüter auf dem Zufuhrförderer zu registrieren, wie dies beispielsweise in US-A-5'186'599 offenbart ist. Diese Daten werden einer Robotersteuerung übermittelt, welche die einzelnen Roboter entsprechend steuert, um möglichst viele der Stückgüter in die Behälter abzufüllen. Dabei wird der erste Roboter in Förderrichtung so viele Stückgüter wie möglich ergreifen und die nachfolgenden Roboter werden versuchen, den Rest vom Zufuhrförderer zu entfernen.

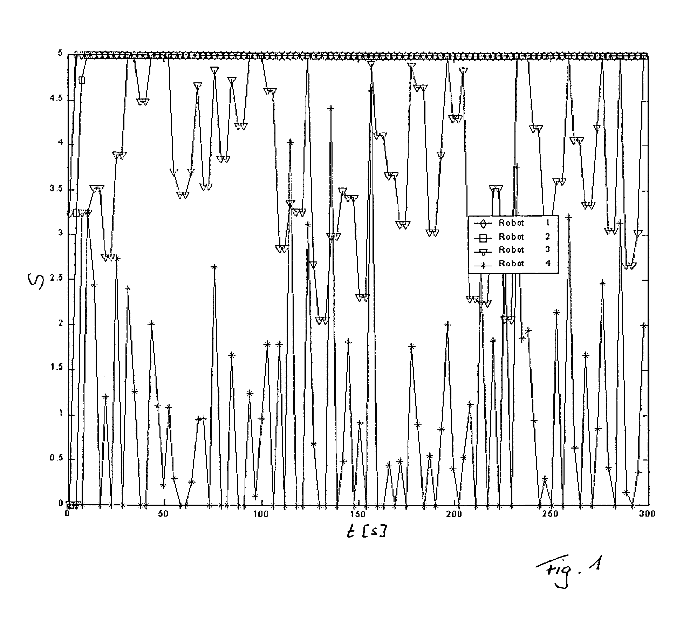

Dies führt jedoch dazu, dass die einzelnen Roboter unterschiedlich stark ausgelastet sind. Der erste Roboter in Förderrichtung weist eine höhere Arbeitsbelastung auf als der letzte in der Reihe. Zudem sind alle Roboter starken Leistungsschwankungen ausgesetzt, wie dies aus Figur 1 ersichtlich ist. Dort ist die Anzahl Produkte dargestellt, welche pro Sekunde von einem Roboter ergriffen werden. Diese Werte sind für insgesamt vier Roboter angegeben, wobei die einzelnen Roboter in Förderrichtung abnumeriert sind. Das heisst, der Roboter Nr. 1 ist der erste Roboter in Förderrichtung. Wie in der Figur 1 ersichtlich ist, arbeiten die ersten zwei Roboter stets an ihrer maximalen Leistungsgrenze. Der dritte Roboter stösst häufig an seine Leistungsgrenze, weist jedoch auch starke Schwankungen in der Arbeitsbelastung auf. Der vierte Roboter hingegen ist kaum ausgelastet, unterliegt jedoch massiven Leistungsschwankungen.

Diese Verteilung der Arbeitsbelastung weist den Nachteil auf, dass Roboter, welche stets an ihrer Leistungsgrenze arbeiten oder welche starken Schwankungen ausgesetzt sind, aufgrund der hohen mechanischen Beanspruchung eine verkürzte Lebensdauer besitzen.

**Darstellung der Erfindung**

Es ist deshalb Aufgabe der Erfindung, ein Verfahren und eine Vorrichtung zu schaffen, welche die Lebensdauer der einzelnen Roboter erhöht.

Diese Aufgabe löst ein Verfahren und eine Vorrichtung mit den Merkmalen des Patentanspruches 1 beziehungsweise 6.

Erfindungsgemäss werden die Roboter so angesteuert, dass alle Roboter zeitlich möglichst gleichmässig ausgelastet und keinen starken Leistungsschwankungen ausgesetzt sind. Dies führt dazu, dass sich alle Roboter in mindestens annähernd demselben Leistungsbereich befinden, wobei der Leistungsbereich unterhalb einer maximalen Leistungsgrenze liegt. In einer bevorzugten Variante des Verfahrens werden nicht nur die Roboter entsprechend angesteuert, sondern es wird auch die Geschwindigkeit des Behälterförderers geregelt.

Weitere vorteilhafte Ausführungsformen gehen aus den abhängigen Patentansprüchen hervor.

**Kurze Beschreibung der Zeichnung**

Im folgenden wird der Erfindungsgegenstand anhand eines bevorzugten Ausführungsbeispieles, welches in den beliegenden Zeichnungen dargestellt ist, erläutert. Es zeigen:

Figur 1　eine graphische Darstellung der zeitlichen Belastung eines Robotersystems gemäss dem Stand der Technik;

Figur 2　eine graphische Darstellung eines Produktestroms in Funktion der Zeit;

Figur 3　eine schematische Darstellung einer Verpackungsanlage mit einem Zufuhrförderer und mehreren Robotern;

Figur 4　ein Ablaufdiagramm des erfindungsgemässen Verfahrens;

Figur 5    eine schematische Darstellung eines dem erfindungsgemässen Verfahren zugrunde liegenden Modells und

Figur 6    eine graphische Darstellung der zeitlichen Belastung eines Robotersystems gemäss der Erfindung.

**Wege zur Ausführung der Erfindung**

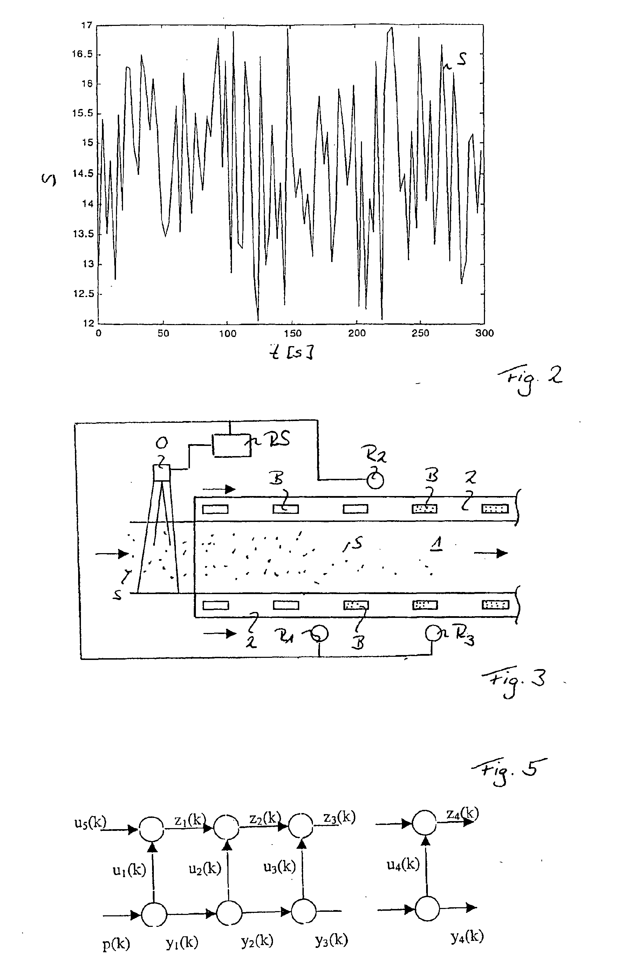

In Figur 2 ist ein Produktestrom von Stückgütern S dargestellt, wie er typischerweise auf einem Zufuhrförderer 1 einer Verpakkungsanlage auftritt. Der Produktestrom weist starke zeitliche Schwankungen auf. Die Stückgüter S können dabei in geordneter oder ungeordneter Weise gefördert werden.

Die Stückgüter S werden, wie in Figur 3 dargestellt, von in Förderrichtung angeordneten Robotern R1, R2, R3 erfasst und in Behälter B abgelegt, welche ebenfalls auf einem Förderer, einem Behälterförderer 2, transportiert werden. Hier dargestellt sind drei Roboter. Das erfindungsgemässe Verfahren eignet sich jedoch für Robotersysteme mit 2 bis n Robotern, wobei n eine natürliche Zahl ist. Vorzugsweise handelt es sich dabei um die eingangs erwähnten Picker-Roboter.

In Figur 3 ist eine Förderung im Gleichstromprinzip dargestellt. Das heisst, die Behälter B bewegen sich in dieselbe Richtung wie die Stückgüter S. Das erfindungsgemässe Verfahren lässt sich jedoch auch in Verpackungsanlagen einsetzen, welche einen Gegenstrom, einen Kreuzstrom oder eine andere Förderart der Stückgüter S und der Behälter B aufweisen.

Im erfindungsgemässen Verfahren wird nun das Ziel verfolgt, alle Behälter B vollständig zu füllen, dabei jedoch die Roboter R1 bis R3, beziehungsweise Rn, zeitlich möglichst gleichmässig zu belasten. Erste Priorität hat dabei das Füllen aller Behälter B, zweite Priorität das Abräumen aller Stückgüter S vom Zufuhrförderer.

Zur Steuerung der Roboter R1 bis Rn muss eine Robotersteuerung RS den Zustand der Anlage vor jedem Berechnungszeitpunkt kennen. Hierfür ist in Förderrichtung vor den Robotern R1 bis Rn ein optisches Erkennungssystem O vorhanden, welches die Lage und Ausrichtung der einzelnen Stückgüter detektiert und diese Daten als Zustandsvariablen an die Robotersteuerung RS weitergibt. Weitere Zustandsvariablen, welche von der Robotersteuerung RS berücksichtigt werden, sind die Geschwindigkeit des Zufuhrförderers 1 und das dynamische Verhalten des Löcherstroms. Die Löcher sind die Anzahl freier, zu füllender Plätze in den Behältern B. Das dynamische Verhalten beinhaltet sowohl die Anzahl wie auch die Fortbewegungsgeschwindigkeit auf dem Behälterförderer 2. Alle diese Zustandsvariablen werden vor der Berechnung des Einsatzgebietes der einzelnen Roboter gemessen. Des weiteren verfügt die Robotersteuerung über Angaben bezüglich der einzelnen Roboter, wie zum Beispiel ihre maximale Belastbarkeit und ihre Einsatzfähigkeit. Als Steuervariable ist ferner die Geschwindigkeit des Behälterförderers 2 vorhanden.

Im erfindungsgemässen Verfahren werden die aktuelle Roboterleistung und vorzugsweise auch die Geschwindigkeit des Behälterförderers so berechnet, dass die folgenden Nebenbedingungen erfüllt sind:

- die Leistung jedes Roboters muss kleiner oder gleich der maximalen Leistung sein;
- die Leistung jedes Roboters muss kleiner oder gleich dem Produktstrom vor dem jeweiligen Einsatzbereich, der sogenannten Roboterzelle, sein;
- die Roboterleistung darf nicht dazu führen, dass Roboter versuchen, mehr Stückgüter zu verpacken, als freie Plätze in einem Behälter vorhanden sind;
- die minimale Roboterleistung muss derart sein, dass die nachfolgenden Roboterzellen die verbleibenden leeren Plätze in den Behältern noch füllen;
- die Leistung der ersten und der letzten Roboterzelle und die Geschwindigkeit des Behälterbandes muss derart sein, dass alle Behälter gefüllt werden und
- die Leistung der ersten und der letzten Roboterzelle muss derart sein, dass die nachfolgenden Roboterzellen möglichst einen grossen Teil des verbleibenden Produktestroms bewältigen.

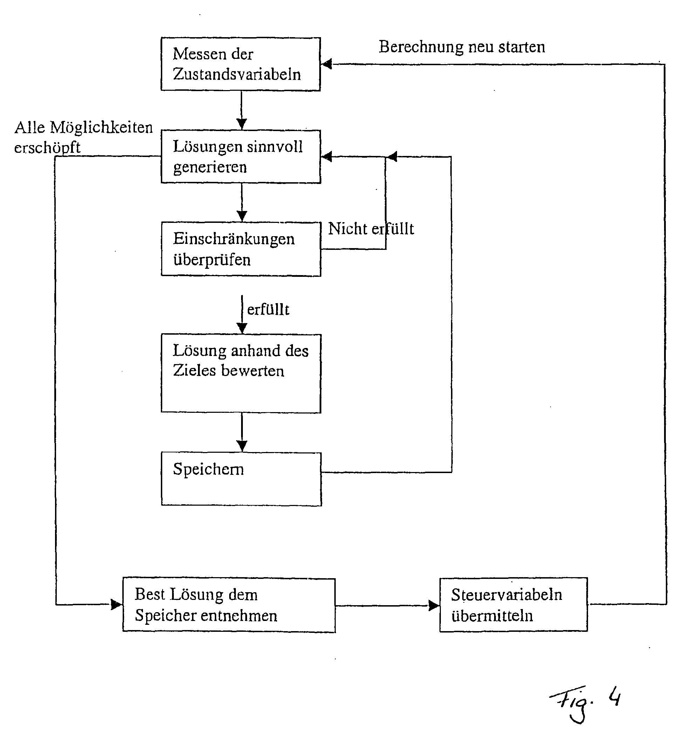

Die Menge aller physikalisch sinnvollen Lösungen wird durch obengenannte Nebenbedingungen beschränkt. Selbstverständlich könnten noch weitere Nebenbedingungen formuliert werden. Anhand der Figur 4 ist erkennbar, wie die Robotersteuerung Lösungen generiert und testet, ob diese die obengenannten Nebenbedingungen erfüllen. Diejenigen Lösungen, welche die Nebenbedingungen erfüllen, werden unter Berücksichtigung des obengenannten Ziels bewertet und in eine Rangfolge eingeordnet. Nachdem alle sinnvollen Lösungen generiert worden sind, wird diejenige ausgewählt, welche die Zielvorstellungen am besten erfüllt, das heisst, welche die Behälter am vollständigsten füllt, jedoch die Roboter am gleichmässigsten belastet.

Das erfindungsgemässe Verfahren arbeitet mit Zeiteinheiten, wobei innerhalb einer Einheit die unten aufgeführten Schritte durchgeführt werden. Die Steuervariablen der letzten Zeiteinheit werden zur Berechnung der Nebenbedingungen gespeichert. Die Länge einer Zeiteinheit hängt von der Art der Verpackungsanlage ab. Typische Werte liegen bei 3 Sekunden für eine Einheit.

In einem ersten Schritt A werden die Zustandsvariablen bestimmt beziehungsweise gemessen. In einem zweiten Schritt B werden physikalisch sinnvolle Lösungen generiert, welche in einem dritten Schritt C auf die Nebenbedingungen überprüft werden. Sind sie nicht erfüllt, so wird Schritt B wiederholt. Sind die Nebenbedingungen erfüllt, so wird in einem vierten Schritt D die Lösung anhand des Ziels bewertet und in einem fünften Schritt E gespeichert, vorauf bei Schritt B weitergefahren wird. Sind alle Möglichkeiten erschöpft, so wird in einem sechsten Schritt F die beste Lösung dem Speicher entnommen und als Steuervariable SV verwendet, um die Roboter R1 bis Rn und auch den Behälterförderer bis zur nächsten Zeiteinheit zu steuern.

Im folgenden wird auf die einzelnen Schritte genauer eingegangen:

Im zweiten Schritt B werden physikalisch mögliche Lösungen generiert. Dies erfolgt beispielsweise durch Diskretisieren der möglichen Roboterleistungen zwischen 0 und einer maximalen Leistung und Generieren aller möglichen Kombinationen der einzelnen Roboterleistungen. Wie in Figur 5 dargestellt ist, unterliegt das System dem Prinzip der Massenerhaltung der Produkte in jeder Roboterzelle. In Figur 5 sind mehrere aufeinanderfolgende Zellen dargestellt, wobei $y_{i-1}(k)$ Stückgüter in die i-te Roboterzelle gefördert werden, $u_i(k)$ Stückgüter vom Roboter in den Behälter gefüllt werden, $y_i(k)$ Stückgüter die i-te Roboterzelle wieder verlassen. Des weiteren ist der Löcherstrom, das heisst die freien Plätze der Behälter, dargestellt. $z_{i-1}(k)$ Löcher gelangen in die i-te Roboterzelle, $z_i(k)$ verlassen sie wieder. b ist der Löcherstrom, welcher in die Anlage am Anfang eintritt. Deshalb gilt einerseits die Massenerhaltung für die Stückgüter, welche in einem ersten Gleichungssystem, dem Massenerhaltung-Gleichungssystem dargestellt ist:

$$y_{i+1}(k+1) = y_i(k) - u_{i+1}(k)$$

$$z_i(k+1) = z_{i-1}(k) - u_{i+1}(k) + \Delta b(k)$$

$$\Delta b(k) = b(k) - b(k-1)$$

Andererseits gilt für ein System mit n Roboterzellen zum Zeitpunkt k in einem zweiten Gleichungssystem, dem zeitdiskreten dynamischen Gleichungssystem:

$$y_1(k+1) = p(k) - u_1(k)$$

$$y_2(k+1) = y_1(k) - u_2(k)$$

$$\vdots$$

$$y_i(k+1) = y_{i-1}(k) - u_i(k)$$

$$\vdots$$

$$y_n(k+1) = y_{n-1}(k) - u_n(k)$$

$$z_1(k+1) = u_{n+1}(k) - u_1(k)$$

$$z_2(k+1) = z_1(k) - u_2(k) + u_{n+1}(k) - z_{n+1}(k)$$

$$\vdots$$

$$z_i(k+1) = z_{i-1}(k) - u_i(k) + u_{n+1}(k) - z_{n+1}(k)$$

$$\vdots$$

$$z_n(k+1) = z_{n-1}(k) - u_n(k) + u_{n+1}(k) - z_{n+1}(k)$$

$$z_{n+1}(k+1) = u_{n+1}(k)$$

$u_{n+1}$ stellt dabei den Löcherstrom dar, welcher am Anfang in die Anlage eintritt. Durch Wahl der Geschwindigkeit des Behälterförderers lässt sich der anfängliche Löcherstrom steuern. Sind die Behälter gleichabständig auf dem Behälterförderer angeordnet, so ist der anfängliche Löcherstrom linear mit der Bandgeschwindigkeit verknüpft.

Zum Zeitpunkt k lassen sich somit die Variablen u berechnen und die Roboterleistung festlegen, um den Zustand des Systems zum Zeitpunkt k+1 eindeutig festzulegen. Die Bewegung des Produktestroms von einer Roboterzelle zur nächsten lässt sich mittels der Gleichung $y_i(k+1) = y_{i-1}(k) - u_i(k)$ beschreiben.

Analoges gilt für den Löcherstrom.

Schritt C erfolgt vorzugsweise in Form einer Negativauswahl, indem getestet wird, ob die Nebenbedingungen verletzt werden. Ist dies nicht der Fall, so wird zum nächsten Schritt D weitergegangen.

Im vierten Schritt D wird die Lösung anhand des Ziels bewertet. Dies kann mit verschiedensten Formeln erreicht werden, wie z.B. mittels Varianz der einzelnen Roboterleistungen oder der Summe der Differenz der einzelnen Roboterleistungen und dem Mittelwert der Leistungen.

Vorzugsweise werden die Schritte B - D als Optimierungsproblem formuliert, welches mittels quadratischer Programmierung gelöst wird. Vorzugsweise werden dabei der Lemke Algorithmus oder eine verallgemeinerte Innere Punkt Methode eingesetzt. Die Güte einer Lösung wird durch eine quadratische Zielfunktion bewertet und die Nebenbedingungen ergeben eine durch lineare Gleichungen beschränkte Lösungsmenge. Es lassen sich hierfür jedoch auch andere Algorithmen einsetzen, beispielsweise lässt sich eine dynamische oder eine allgemeine nicht lineare Programmierung verwenden.

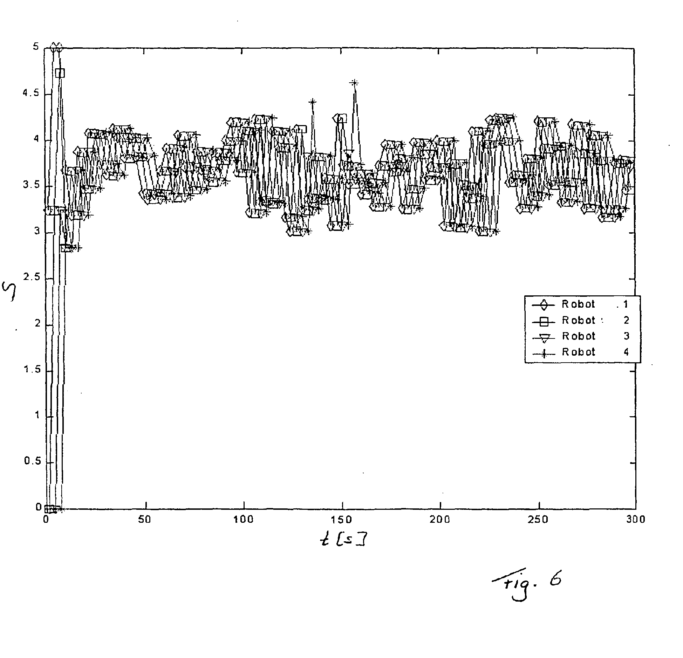

In Figur 6 ist dargestellt, wie im erfindungsgemässen Verfahren die einzelnen Roboter belastet werden. Wie im Vergleich zu Figur 1 sichtbar ist, sind die einzelnen Roboter gleichmässiger ausgelastet, Spitzen sind kaum mehr vorhanden und alle Roboter sind ungefähr gleich belastet, wobei keiner im maximalen Leistungsbereich arbeitet.

**Patentansprüche**

1.   Verfahren zum Befüllen von Behältern (B) mit Stückgütern (S), wobei die Stückgüter (S) auf einem Zufuhrförderer (1) mindestens zwei in Förderrichtung angeordneten Robotern (R1.. Rn) zugeführt werden, um mittels dieser Roboter in leere Plätze der auf einem Behälterförderer (2) geförderten Behälter (B) gefüllt zu werden, wobei die Roboter (R1.. Rn) nach Massgabe der Anordnung der Stückgüter (S) auf dem Zufuhrförderer (1) gesteuert werden, **dadurch gekennzeichnet, dass** der Befüllvorgang in Zeiteinheiten (k) unterteilt wird, für jede Zeiteinheit (k) Zustandsvariablen bestimmt werden,

(a) das dynamische Verhalten der freien Plätze und der Stückgüter (S) während einer Zeiteinheit dargestellt werden, vollständiges Befüllen der Behälter (B) und zeitlich gleichmässige Auslastung aller Roboter (R1.. Rn) als Randbedingungen eingeführt werden und unter Berücksichtung der Randbedingungen und der Zustandsvariablen beste Parameter zur Steuerung der Roboter (R1.. Rn) ermittelt werden, oder

b) für jede Zeiteinheit physikalisch mögliche Lösungen generiert werden, dass Nebenbedingungen überprüft werden, dass Lösungen anhand eines Ziels bewertet werden, dass die Lösungen miteinander verglichen werden und dass die beste Lösung als Steuervariable zur Steuerung der Roboter in dieser Zeiteinheit verwendet werden,

und die Roboter (R1.. Rn) so angesteuert werden, dass sie zeitlich mindestens annähernd gleichmässig ausgelastet sind.

2. Verfahren nach Anspruch 1, **dadurch gekennzeichnet, dass** die Geschwindigkeit des Behälterförderers (2) geregelt wird, um die Belastung der Roboter (R1..Rn) zu regeln.

3. Verfahren nach Anspruch 1, **dadurch gekennzeichnet, dass** in einem ersten Gleichungssystem eine Erhaltung der Anzahl Stückgüter (S) während des Befüllens dargestellt ist, in einem zweiten Gleichungssystem das dynamische Verhalten der freien Plätze und der Stückgüter (S) während einer Zeiteinheit dargestellt werden, ein zeitdiskretes dynamisches Gleichungssystem aufgestellt wird und die bestem Parameter mittels Optimierungsalgorithmen ermittelt werden.

4. Verfahren nach Anspruch 3, **dadurch gekennzeichnet, dass** zur Optimierung quadratische Programmierung eingesetzt wird.

5. Verfahren nach Anspruch 3, **dadurch gekennzeichnet, dass** die Zustandsvariablen die Anordnung, Anzahl und Ausrichtung der Stückgüter (S) auf dem Zufuhrförderer (1) und die maximale Leistung der einzelnen Roboter (R1..Rn) umfassen.

6. Vorrichtung zum Befüllen von Behältern (B) mit Stückgütern (S), wobei die Stückgüter (S) auf einem Zufuhrförderer (1) mindestens zwei in Förderrichtung angeordneten Robotern (R1..Rn) zuführbar sind und mittels dieser Roboter (R1..Rn) in leere Plätze der auf einem Behälterförderer 2 geförderten Behälter (B) füllbar sind, wobei die Roboter (R1..Rn) nach Massgabe der Anordnung der Stückgüter (S) auf dem Zufuhrförderer (1) steuerbar sind, **dadurch gekennzeichnet, dass** eine Robotersteuerung (RS) vorhanden ist, mittels welcher die Roboter (R1..Rn) so ansteuerbar sind, dass sie zeitlich mindestens annähernd gleichmässig ausgelastet sind.

7. Vorrichtung nach Anspruch 6, **dadurch gekennzeichnet, dass** die Vorrichtung eine mit der Robotersteuerung verbundene Erkennungseinheit (O) aufweist, mittels welcher die Anzahl und Anordnung der Stückgüter (S) erfassbar sind.

8. Vorrichtung nach Anspruch 6, **dadurch gekennzeichnet, dass** die Geschwindigkeit des Behälterförderers(2) mittels der Robotersteuerung (RS) zwecks Optimierung der gleichmässigen Auslastung der Roboter (R1..Rn) steuerbar ist.

## Claims

1. A method of filling containers (B) with piece goods (S), the piece goods (S) being fed on a feed conveyer (1) to at least two robots (R1.. Rn) arranged in the conveying direction, in order by means of these robots to be put into empty spaces in the containers (B) conveyed on a container conveyer (2), the robots (R1.. Rn) being controlled in accordance with the arrangement of the piece goods (S) on the feed conveyer (1), wherein the filling operation is subdivided into time units (k), wherein state variables are determined for each time unit (k),

(a) wherein the dynamic behavior of the free spaces and of the piece goods during a time unit are represented, wherein complete filling of the containers (B) and utilization of all the robots (R1.. Rn) uniformly over time are introduced as boundary conditions, wherein, taking into account the boundary conditions and the state variables, the best parameters for controlling the robots (R1.. Rn) are determined, or

(b) wherein physically possible solutions are generated for each time unit, wherein secondary conditions are checked, wherein solutions are evaluated by using an objective, wherein the solutions are compared with one another and wherein the best solution is used as a control variable for controlling the robots in this time unit,

and wherein the robots (R1.. Rn) are driven in such a way that they are utilized at least approximately uniformly over time.

2. The method as claimed in claim 1, wherein the speed of the container conveyer (2) is controlled in order to control the loading of the robots (R1.. Rn).

3. The method as claimed in claim 1, wherein the maintenance of the number of piece goods (S) during filling is represented in a first system of equations, wherein the dynamic behavior of the free spaces and of the piece goods (S) during a time unit are represented in a second system of equations, wherein a time-discrete dynamic system of equations is set up and the best parameters are determined by means of optimization algorithms.

4. The method as claimed in claim 3, wherein quadratic programming is used for the optimization.

5. The method as claimed in claim 3, wherein the state variables comprise the arrangement, number and alignment of the piece goods (S) on the feed conveyer (1) and the maximum output of the individual robots (R1.. Rn).

6. An apparatus for filling containers (B) with piece goods (S), it being possible for the piece goods (S) to be fed on a feed conveyer (1) to at least two robots (R1.. Rn) arranged in the conveying direction and, by means of these robots (R1.. Rn), put into empty spaces in the containers (B) conveyed on a container conveyer (2), the robots C being controllable in accordance with the arrangement of the piece goods (S) on the feed conveyer (1), wherein there is a robot control system (RS) by means of which the robots (R1.. Rn) can be driven in such a way that they are utilized at least approximately uniformly over time.

7. The apparatus as claimed in claim 6, wherein the apparatus has a detection unit (O) which is connected to the robot control system and by means of which the number and arrangement of the piece goods (S) can be registered.

8. The apparatus as claimed in claim 6, wherein the speed of the container conveyer (2) can be controlled by means of the robot control system (RS) for the purpose of optimizing the uniform utilization of the robots (R1.. Rn).

**Revendications**

1. Procédé pour remplir des conteneurs (B) avec des marchandises (S), dans lequel on fournit les marchandises (S) sur un transporteur d'alimentation (1) à au moins deux robots (R1 ... Rn) disposés dans la direction de transport, pour être chargées au moyen de ces robots dans des endroits vides des conteneurs (B) transportés sur un transporteur de conteneurs (2), dans lequel on commande les robots (R1 ... Rn) selon la disposition des marchandises (S) sur le transporteur d'alimentation (1), **caractérisé en ce que** l'on subdivise l'opération de remplissage en unités de temps (k), on détermine des variables d'état pour chaque unité de temps (k),

(a) on représente le comportement dynamique des endroits libres et des marchandises (S) pendant une unité de temps, on introduit le remplissage complet des conteneurs (B) et la pleine utilisation uniforme au cours du temps de tous les robots (R1 ... Rn) comme conditions aux limites et on détermine les meilleurs paramètres pour la commande des robots (R1 ... Rn) en tenant compte des conditions aux limites et des variables d'état, ou

(b) on génère des solutions physiquement possibles pour chaque unité de temps, on contrôle des conditions secondaires, on évalue les solutions à l'aide d'un objectif, on compare les solutions l'une à l'autre, et on utilise la meilleure solution comme variable de commande pour la commande des robots dans cette unité de temps,

et on commande les robots (R1 ... Rn) de telle manière qu'ils soient utilisés pleinement de manière au moins pratiquement uniforme au cours du temps.

2. Procédé selon la revendication 1, **caractérisé en ce que** l'on régule la vitesse du transporteur de conteneurs (2), afin de réguler la charge des robots (R1 ... Rn).

**3.** Procédé selon la revendication 1, **caractérisé en ce que** l'on représente dans un premier système d'équations un maintien du nombre de marchandises (S) pendant le remplissage, on représente dans un deuxième système d'équations le comportement dynamique des endroits libres et des marchandises (S) pendant une unité de temps, on construit un système d'équations dynamique temporel discret et on détermine les meilleurs paramètres au moyen d'algorithmes d'optimisation.

**4.** Procédé selon la revendication 3, **caractérisé en ce que** l'on utilise une programmation quadratique pour l'optimisation.

**5.** Procédé selon la revendication 3, **caractérisé en ce que** les variables d'état comprennent la disposition, le nombre et l'orientation des marchandises (S) sur le transporteur d'alimentation (1) et la puissance maximale des robots individuels (R1 ... Rn).

**6.** Dispositif pour remplir des conteneurs (B) avec des marchandises (S), dans lequel les marchandises (S) sur un transporteur d'alimentation (1) peuvent être fournies à au moins deux robots (R1 ... Rn) disposés dans la direction de transport et peuvent être chargées au moyen de ces robots (R1 ... Rn) dans des endroits vides des conteneurs (B) transportés sur un transporteur de conteneurs (2), dans lequel les robots (R1 ... Rn) peuvent être commandés selon la disposition des marchandises (S) sur le transporteur d'alimentation (1), **caractérisé en ce qu'**il comprend une commande des robots (RS), au moyen de laquelle les robots (R1 ... Rn) peuvent être commandés de telle manière qu'ils soient utilisés pleinement de manière au moins pratiquement uniforme au cours du temps.

**7.** Dispositif selon la revendication 6, **caractérisé en ce que** le dispositif comprend une unité de reconnaissance (O) reliée à la commande des robots, au moyen de laquelle on peut déterminer le nombre et la disposition des marchandises (S).

**8.** Dispositif selon la revendication 6, **caractérisé en ce que** la vitesse du transporteur de conteneurs (2) peut être commandée au moyen de la commande des robots (RS) en vue d'optimiser la pleine utilisation uniforme des robots (R1 ... Rn).

Fig. 1

Fig. 2

Fig. 3

Fig. 5

Fig. 4

Fig. 6